# EUROPÄISCHE PATENTANMELDUNG

(11) **EP 2 740 641 A2**
(43) Veröffentlichungstag der Anmeldung: **11.06.2014**
(21) Anmeldenummer: 13192265.0
(22) Anmeldetag: 11.11.2013
(51) Int. Cl.: B60T 10/02, F16D 57/00

(54) **Verfahren zur geregelten Begrenzung der Bremsleistung einer hydrodynamischen Dauerbremse**

(30) Priorität: 10.12.2012 DE 102012222605
(71) Anmelder: ZF Friedrichshafen AG, 88038 Friedrichshafen (DE)
(72) Erfinder: Schmidtner, Peter, 88131 Lindau (DE); Fleischer, Siegibert, 88410 Bad Wurzach (DE); Bruegel, Benjamin, 88090 Immenstaad (DE); Rick, Jürgen, 88677 Markdorf (DE); Ulmer, Andreas, 88074 Meckenbeuren (DE)

(57) **Zusammenfassung**

Die Erfindung betrifft ein Verfahren zur geregelten Begrenzung der Bremsleistung einer hydrodynamischen Dauerbremse für Kraftfahrzeuge, bei welchem die im Arbeitsmittel der hydrodynamischen Dauerbremse erzeugte Verlustwärme über einen Kühlmittelkreislauf abgeführt wird, wobei das Bremsmoment (M_Int) der hydrodynamischen Dauerbremse bei Überschreiten einer vorgegebenen maximalen Temperatur (T_K(max)) des Kühlmittels so verringert wird, dass die Kühlkapazität des Kühlmittels jeweils optimal ausgenutzt wird.

Um zu verhindern, dass die Temperatur (T_A) des Arbeitsmittels der hydrodynamischen Dauerbremse einen zulässigen Wert übersteigt, ist vorgesehen, dass die kühlmittelseitige Leistungsadaption der hydrodynamischen Dauerbremse bei negativer bzw. positiver Abweichung der aktuellen Kühlmitteltemperatur (T_K) von einem Sollwert in positiven bzw. negativen Adaptionsschritten erfolgt, wobei die kühlmittelseitige Leistungsadaption zusätzlich an die Temperatur (T_A) des Arbeitsmittels gekoppelt wird, indem bei Kühlmitteltemperaturen (T_K) unterhalb der Solltemperatur und bei hohen Arbeitsmitteltemperaturen die kühlmittelseitigen Leistungsadaptionsschritte in Abhängigkeit von der aktuellen Arbeitsmitteltemperatur (T_A) so geregelt werden, dass diese Kühlmitteltemperatur (T_K) im Bereich unterhalb einer maximal zulässigen Kühlmitteltemperatur (T_K(zul)) gehalten wird.

## Beschreibung

Die Erfindung betrifft ein Verfahren zur geregelten Begrenzung der Bremsleistung einer hydrodynamischen Dauerbremse gemäß dem Oberbegriff des Patentanspruchs 1.

Hydrodynamische Dauerbremsen werden beispielsweise in Kraftfahrzeugen zum verschleißfreien Abbremsen derselben genutzt. Je nach Bauform werden diese auch als Retarder oder Intarder bezeichnet. Während ein Retarder als eine von einem Getriebe baulich getrennte Vorrichtung ausgebildet ist, befindet sich ein Intarder zumindest weitgehend in dem Gehäuse eines Getriebes und hat mit letzterem einen gemeinsamen Ölhaushalt. Der Intarder nutzt demnach das Getriebeöl als Arbeitsmittel zur Erzeugung einer angeforderten Bremswirkung. Unabhängig von der jeweiligen Bauform wird bei einem Abbremsvorgang im Arbeitsmittel einer hydrodynamischen Dauerbremse Verlustwärme erzeugt, welche mittels eines Wärmetauschers an ein Kühlmittel abgegeben wird. Dieses Kühlmittel ist bei Kraftfahrzeugen üblicherweise das Wasser im Kühlwasserkreislauf seines Antriebsmotors.

Das Bremsmoment einer hydrodynamischen Dauerbremse kann so geregelt werden, dass einerseits eine höchstzulässige Temperatur des Kühlmittels nicht überschritten wird, andererseits aber diese Temperatur des Kühlmittels nach Möglichkeit nicht unterschritten wird, um so insgesamt die mögliche Bremsleistung der hydrodynamischen Dauerbremse voll auszunützen.

Aus der EP 1 380 485 B1 ist bereits ein Verfahren zur Begrenzung der Bremswirkung eines Intarders in Abhängigkeit von der Temperatur des Kühlmittels bekannt, bei dem das Bremsmoment des Intarders beim Überschreiten einer vorgegebenen maximalen Temperatur des Kühlmittels jeweils entlang einer einem jeweiligen Temperaturgradienten der Kühlmitteltemperatur zugeordneten Rückregelkurve verringert bzw. begrenzt wird. Unterschiedliche Temperaturgradienten entsprechen jeweils unterschiedlichen Rückregelkurven, was bedeutet, dass bei einem größeren Temperaturgradienten das Bremsmoment stärker verringert wird, um sicher unterhalb der höchstzulässigen Temperatur des Kühlmittels zu bleiben. Bei diesem bekannten Verfahren bleibt die Temperatur des Arbeitsmittels des Intarders unberücksichtigt. Dadurch können Betriebszustände auftreten, die sehr hohe Temperaturen des Arbeitsmittels, also des Intarder- und Getriebeöls zur Folge haben. Dauerhaft hohe Öltemperaturen führen jedoch nachteilig zu einer Schädigung des Intardersystems und gegebenenfalls auch des Getriebes.

Aus der EP 0 873 925 A2 ist zwar bereits ein Verfahren bekannt, bei dem eine Steuer- und Regeleinheit die Bremsleistung der hydrodynamischen Dauerbremse beim Überschreiten einer vorbestimmten Temperatur des Kühl- und/oder Arbeitsmittels begrenzt. Dabei ist jedoch vorgesehen, dass zusätzlich oder anstelle des Regelungssystems für die Kühlmitteltemperatur ein Regelungssystem für die Temperatur des Arbeitsmittels eingerichtet ist, wobei die Steuerung bzw. Regelung für das Arbeitsmittel analog zur Steuerung bzw. Regelung des Kühlkreislaufes erfolgen kann. Dieses bekannte Verfahren beziehungsweise die zur Durchführung dieses Verfahrens vorgesehene Vorrichtung sind allerdings verhältnismäßig aufwendig bzw. teuer.

Vor diesem Hintergrund liegt der Erfindung die Aufgabe zugrunde, ein Verfahren zur geregelten Begrenzung der Bremsleistung einer hydrodynamischen Dauerbremse vorzustellen, welches mit einfachen Mitteln auch die Arbeitsmitteltemperatur der hydrodynamischen Dauerbremse berücksichtigt und zur Regelung seiner Bremsleistung verwendet.

Die Lösung dieser Aufgabe ergibt sich aus den Merkmalen des Hauptanspruches, während eine vorteilhafte Ausgestaltung und Weiterbildung der Erfindung den Unteransprüchen entnehmbar ist.

Der Erfindung liegt die Erkenntnis zugrunde, dass es möglich sein sollte, das kühlmittelseitige Leistungsadaptionssystem durch den jeweiligen Wert der Arbeitsmitteltemperatur so zu beeinflussen, dass auch diese Arbeitsmitteltemperatur in ihren zulässigen Grenzen gehalten werden kann.

Demnach geht die Erfindung aus von einem Verfahren zur geregelten Begrenzung der Bremsleistung einer hydrodynamischen Dauerbremse für Kraftfahrzeuge, bei welchem die im Arbeitsmittel der hydrodynamischen Dauerbremse erzeugte Verlustwärme über einen Kühlmittelkreislauf abgeführt wird, wobei das Bremsmoment M_Int der hydrodynamischen Dauerbremse bei Überschreiten einer vorgegebenen maximalen Temperatur T_K(max) des Kühlmittels so verringert wird, dass die Kühlkapazität des Kühlmittels jeweils optimal ausgenutzt wird.

Zur Lösung der gestellten Aufgabe ist dabei vorgesehen, dass die kühlmittelseitige Leistungsadaption der hydrodynamischen Dauerbremse bei negativer beziehungsweise positiver Abweichung der aktuellen Kühlmitteltemperatur T_K von einem Sollwert in positiven beziehungsweise negativen Adaptionsschritten erfolgt, wobei die kühlmittelseitige Leistungsadaption zusätzlich an die Temperatur T_Ades Arbeitsmittels gekoppelt wird, indem bei Kühlmitteltemperaturen T_K unterhalb der Solltemperatur und bei hohen Arbeitsmitteltemperaturen die kühlmittelseitigen Leistungsadaptionsschritte in Abhängigkeit von der aktuellen Arbeitsmitteltemperatur T_A so geregelt werden, dass diese Kühlmitteltemperatur T_K im Bereich unterhalb einer maximal zulässigen Kühlmitteltemperatur T_K(zul) gehalten wird.

Die Leistungsadaption der hydrodynamischen Dauerbremse erfolgt demnach grundsätzlich über das kühlmittelseitige Leistungsadaptionssystem, welches lediglich zusätzlich durch die Arbeitsmitteltemperatur der Dauerbremse beeinflusst beziehungsweise mit dieser gekoppelt wird. Auf diese Weise können zwei nebeneinander existierende Systeme, nämlich ein kühlmittelseitiges Leistungsadaptionssystem neben einem arbeitsmittelseitigen Leistungsadaptionssystem vermieden werden, da die Beeinflussung des ersteren durch die Arbeitsmitteltemperatur lediglich über einige Rechenschritte in einer Steuerungseinrichtung bewerkstelligt wird.

Gemäß einer bevorzugten Ausgestaltung der Erfindung ist vorgesehen, dass die Leistungsadaptionsschritte zusätzlich in Abhängigkeit von dem aktuellen Gradienten der Arbeitsmitteltemperatur T_A so geregelt werden, dass bei jeweils größeren Gradienten die Leistungsadaptionsschritte bei einer Annäherung der Arbeitsmitteltemperatur T_A an die maximal zulässige Arbeitsmitteltemperatur T_A(zul) von geringeren Temperaturwerten her kommend kleiner sind, und von größeren Werten her kommend größer sind als die Leistungsadaptionsschritte bei einem weniger großen Gradienten der Arbeitsmitteltemperatur T_A.

Bei einem größeren Gradienten der Arbeitsmitteltemperatur T_A erfolgt demnach eine positive Adaption in kleineren Schritten, um ein Überschwingen der Arbeitsmitteltemperatur über die maximal zulässige Arbeitsmitteltemperatur T_A(zul) zu vermeiden, und es erfolgt eine negative Adaption in größeren Schritten, um eine gegebenenfalls übergeschwungene Temperatur schnell wieder unter die maximal zulässige Arbeitsmitteltemperatur T_A(zul) zurückzuführen.

Bei einer Berechnung eines Leistungsadaptionsschrittes werden die Arbeitsmitteltemperatur und der Arbeitsmitteltemperaturgradient in der folgenden Weise berücksichtigt:
1. Sollwert der Kühlmitteltemperatur noch nicht erreicht.
2. Berechnung des Leistungsadaptionsschrittes für die hydrodynamische Dauerbremse.
3. Berücksichtigung der Arbeitsmitteltemperatur der hydrodynamischen Dauerbremse und des Arbeitsmitteltemperatur-Gradienten.
4. Ausführung des Leistungsadaptionsschrittes an der hydrodynamischen Dauerbremse.

Positive Leistungsadaptionsschritte (2. Schritt) können bei hohen Arbeitsmitteltemperaturen (3. Schritt) begrenzt, ganz blockiert oder zu Leistungsadaptionsschritten mit negativen Werten verändert werden. So kann beispielsweise im Falle einer vergleichsweise geringen Kühlmitteltemperatur ein positiver Leistungsadaptionsschritt dann nicht ausgeführt werden, wenn die Arbeitsmitteltemperatur oder der Arbeitsmitteltemperatur-Gradient einen zu hohen Wert aufweist. Mit dieser Kopplung der Arbeitsmitteltemperatur an die kühlmittelseitige Leistungsadaption kann das System der hydrodynamischen Dauerbremse insgesamt vor thermischer Schädigung geschützt werden.

Nachfolgend ist beispielhaft ein Kennfeld der Maximalwerte einer Leistungsadaption einer hydrodynamischen Dauerbremse bei spezifischen Arbeitsmitteltemperaturen T_A und zwei unterschiedlichen Arbeitsmitteltemperaturgradienten dargestellt:

**Titel: Kennfeld der Maximalwerte einer Leistungsadaption einer hydrodynamischen Dauerbremse bei spezifischen Arbeitsmitteltemperaturen und Arbeitsmitteltemperaturgradienten**

| T_A | 150°C | 155°C | 160°C | 165°C | 170°C | 180°C |
|---|---|---|---|---|---|---|
| 0°C/s | 50 kW | 40 kW | 20 kW | 0 kW | -10 kW | -30 kW |
| 10°C/s | 50 kW | 20 kW | 0 kW | 0 kW | -20 kW | -50 kW |

Diese Tabelle verdeutlicht, dass bei einem Arbeitsmitteltemperaturgradienten von 10°C/s die Leistungsadaptionsschritte bei einer Annäherung der Arbeitsmitteltemperatur T_A an die maximal zulässige Temperatur T_A(zul) (hier 165 °C) von geringeren Temperaturwerten (150°C) her kommend kleiner und von größeren Werten (180°C) her kommend größer sind als die Adaptionsschritte bei dem weniger großen Gradienten (0°C/s) der Arbeitsmitteltemperatur T_A. Bei einem größeren Gradienten der Arbeitsmitteltemperatur T_A erfolgt demnach eine positive Leistungsadaption in kleineren Schritten, um ein Überschwingen der Arbeitsmitteltemperatur T_A über die maximal zulässige Arbeitsmitteltemperatur T_A(zul) zu vermeiden, und es erfolgt eine negative Leistungsadaption in größeren Schritten, um eine gegebenenfalls übergeschwungene Temperatur schnell wieder unter die maximal zulässige Arbeitsmitteltemperatur T_A(zul) zurückzuführen.

In weiterer Ausgestaltung der Erfindung kann vorgesehen sein, dass das Bremsmoment M_Int der hydrodynamischen Dauerbremse bei Überschreiten einer vorgegebenen maximalen Temperatur T_K(max) des Kühlmittels jeweils entlang einer einem Temperaturgradienten der Kühlmitteltemperatur T_K zugeordneten Rückregelkurve A, B, C verringert wird.

Zur weiteren Erläuterung der der Erfindung zugrunde liegenden Leistungsadaption ist eine Figur beigefügt, welche beispielhaft den Verlauf des Bremsmomentes M_Int einer hydrodynamischen Dauerbremse als Funktion von der Temperatur T_K des Kühlmittels für unterschiedliche Gradienten der Arbeitsmitteltemperatur T_A zeigt.

Im allgemeinen wird eine Regelung des Bremsmomentes M_Int durchgeführt, wenn bei einem maximalen Bremsmoment M_Int(max) der hydrodynamischen Dauerbremse eine vorbestimmte Temperatur T_K(max) des Kühlmittels erreicht wird, wobei die Form der drei Rückregelkurven A, B, C, also der Verlauf des Bremsmomentes M_Int als Funktion der Temperatur T_K vom aktuellen Gradienten der Arbeitsmitteltemperatur T_A abhängt. Dabei soll die Kühlkapazität des Kühlmittels jeweils optimal genutzt und die höchste zulässige Temperatur T_K(zul) des Kühlmittels jedoch nicht überschritten werden.

Erkennbar erfolgt bei einem vergleichsweise großen Gradienten der Arbeitsmitteltemperatur T_A die Leistungsadaption der hydrodynamischen Dauerbremse gemäß der Kurve A mit verhältnismäßig großen Leistungsadaptionsschritten, welches eine vergleichsweise schnelle Bremsleistungsreduktion der hydrodynamischen Dauerbremse zur Folge hat. Bei einem kleinen Gradienten der Arbeitsmitteltemperatur T_A erfolgt die Leistungsadaption der hydrodynamischen Dauerbremse gemäß der Kurve C, bei der die Leistungsadaptionsschritte vergleichsweise klein sind, so dass die Bremsleistung sowie die Wärmeerzeugung der hydrodynamischen Dauerbremse nur langsam verringert wird. Bei einem mittelgroßen Arbeitsmitteltemperaturgradienten erfolgt die Bremsleistungsanpassung der hydrodynamischen Dauerbremse gemäß der Kurve B mit einer mittleren Geschwindigkeit. Erkennbar wird bei der Nutzung aller drei Rückregelkurven A, B, C ein Bremsmoment der hydrodynamischen Dauerbremse erreicht, bei dem die maximal zulässige Kühlmitteltemperatur T _K(zul) nicht überschritten wird.

### Bezugszeichen

- A: Erste Rückregelkurve
- B: Zweite Rückregelkurve
- C: Dritte Rückregelkurve
- M_Int: Bremsmoment der hydrodynamischen Dauerbremse
- M_Int(max): Maximales Bremsmoment der hydrodynamischen Dauerbremse
- T_A: Temperatur des Arbeitsmittels
- T_A(zul): Maximal zulässige Temperatur des Arbeitsmittels
- T_K: Temperatur des Kühlmittels
- T_K(max): Vorbestimmte Temperatur des Kühlmittels
- T_K(zul): Maximal zulässige Temperatur des Kühlmittels

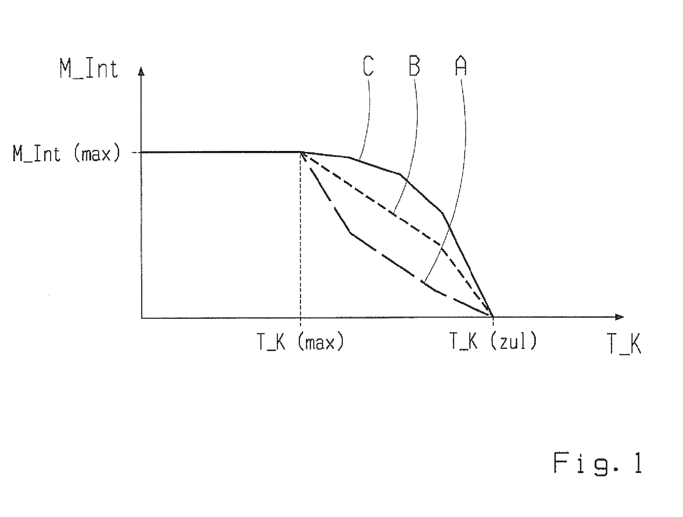

## Patentansprüche

1. Verfahren zur geregelten Begrenzung der Bremsleistung einer hydrodynamischen Dauerbremse für Kraftfahrzeuge, bei welchem die im Arbeitsmittel der hydrodynamischen Dauerbremse erzeugte Verlustwärme über einen Kühlmittelkreislauf abgeführt wird, wobei das Bremsmoment (M_Int) der hydrodynamischen Dauerbremse bei Überschreiten einer vorgegebenen maximalen Temperatur (T_K(max)) des Kühlmittels so verringert wird, dass die Kühlkapazität des Kühlmittels jeweils optimal ausgenutzt wird, **dadurch gekennzeichnet, dass** die kühlmittelseitige Leistungsadaption der hydrodynamischen Dauerbremse bei negativer bzw. positiver Abweichung der aktuellen Kühlmitteltemperatur (T_K) von einem Sollwert in positiven bzw. negativen Adaptionsschritten erfolgt, wobei die kühlmittelseitige Leistungsadaption zusätzlich an die Temperatur (T_A) des Arbeitsmittels gekoppelt wird, indem bei Kühlmitteltemperaturen (T_K) unterhalb der Solltemperatur und bei hohen Arbeitsmitteltemperaturen die kühlmittelseitigen Leistungsadaptionsschritte in Abhängigkeit von der aktuellen Arbeitsmitteltemperatur (T_A) so geregelt werden, dass diese Kühlmitteltemperatur (T_K) im Bereich unterhalb einer maximal zulässigen Kühlmitteltemperatur (T_K(zul)) gehalten wird.

2. Verfahren nach Anspruch 1, **dadurch gekennzeichnet, dass** die Leistungsadaptionsschritte zusätzlich in Abhängigkeit von dem aktuellen Gradienten der Arbeitsmitteltemperatur (T_A) so geregelt werden, dass bei jeweils größeren Gradienten die Leistungsadaptionsschritte bei einer Annäherung der Arbeitsmitteltemperatur (T_A) an die maximal zulässige Arbeitsmitteltemperatur (T_A(zul)) von geringeren Werten her kommend kleiner sind, und von größeren Werten her kommend größer sind als die Leistungsadaptionsschritte bei einem weniger großen Gradienten der Arbeitsmitteltemperatur (T_A).

3. Verfahren nach Anspruch 1 oder 2, **dadurch gekennzeichnet, dass** das Bremsmoment (M_Int) der hydrodynamischen Dauerbremse bei Überschreiten einer vorgegebenen maximalen Temperatur (T_K(max)) des Kühlmittels jeweils entlang einer einem Temperaturgradienten der Kühlmitteltemperatur (T_K) zugeordneten Rückregelkurve (A, B, C) verringert wird.
